# FASCICULE DE BREVET EUROPEEN

(11) **EP 0 945 659 B1**
(45) Date de publication et mention de la délivrance du brevet: **12.03.2003**
(21) Numéro de dépôt: 99400714.4
(22) Date de dépôt: 23.03.1999
(51) Int. Cl.: F16L 3/10, F16L 3/237

(54) **Collier de fixation de tuyauteries et procédé de fabrication dudit collier**
Befestigungsschelle von Rohren und Verfahren zur Herstellung
Clamp for fastening pipes and process for producing it

(30) Priorité: 23.03.1998 FR 9803536
(43) Date de publication de la demande: 29.09.1999
(73) Titulaire: AEML, 45130 Meung sur Loire (FR)
(72) Inventeur: Lepinoy, Alain, 45130 Meung Sur Loire (FR); Turpin, Michel, 45240 La Ferte Saint Aubin (FR)
(74) Mandataire: Debay, Yves

(56) Documents cités:
- WO-A-96/35903
- FR-A- 1 351 079
- FR-A- 2 442 366
- US-A- 3 461 708
- US-A- 3 650 141

## Description

La présente invention concerne un collier de fixation simple ou double d'éléments cylindriques, notamment de tuyauteries, sur un support fixe. L'invention concerne, plus particulièrement, un collier de fixation du type constitué de deux demi-colliers.

De tels colliers sont bien connus et peuvent se présenter sous différentes formes. Généralement, les deux demi-colliers sont pourvus de pattes latérales au niveau desquelles l'assemblage du collier est assuré. Parmi ceux-ci, on peut se référer au brevet FR 2 533 659. Les moyens d'assemblage consistent généralement en des vis et boulons. La fixation du collier sur un support fixe est parfois assurée par un taraudage effectué sur un des deux demi-colliers. Certains colliers sont constitués d'une bande métallique enroulée sur elle-même et le serrage du collier s'effectue en agrafant l'une des deux extrémités conformées en crochet sur une oreille formée sur l'autre extrémité, tels que décrits dans le brevet européen 3192. Ce type d'assemblage est aussi utilisé pour des colliers constitués de deux demi-colliers articulés par une de leurs extrémités. Ceci ne permet pas une utilisation facile à proximité d'une paroi.

Il est également connu par le brevet français 2 442 366 des colliers de fixation permettant le maintien temporaire de tube pendant son ajustement. Ce type de collier est composé d'un arceau principal, en matière plastique tel que du polyamide, présentant en son milieu un pied permettant de fixer l'arceau sur un support. L'arceau s'épaissit de son centre vers ses extrémités libres et présente une profondeur supérieure au rayon du cercle intérieur du collier. Les extrémités libres enserrent plus de la moitié de la circonférence du tube et permettent ainsi de maintenir provisoirement le tube. Les extrémités de l'arceau principal comprennent des dégagements destinés à accueillir les pattes d'accrochage d'un petit arceau. Le verrouillage du tube est effectué en plaçant le petit arceau sur l'arceau principal. L'insertion du tube dans l'arceau principal nécessite une déformation importante des extrémités libres. Le matériau utilisé doit présenter une très grande élasticité, limitant le choix à un matériau plastique. De plus, cette grande élasticité, nécessaire à l'insertion du tube ne garantit pas un maintien satisfaisant du tube, celui-ci ayant tendance à glisser lorsqu'il est positionné verticalement.

Un premier but de l'invention est de proposer un collier palliant les inconvénients de l'art antérieur et qui facilite l'installation de tuyauteries sur un support fixe. Les avantages de ce type de collier sont bien connus, notamment sa facilité d'assemblage et de démontage.

Ce but est atteint par le fait que le collier de fixation de tuyauteries ou analogue selon l'invention est constitué d'au moins deux éléments comprenant chacun une face extérieure opposée à l'élément à fixer et une face intérieure, au moins un premier élément, dit élément fixe, comportant un moyen de fixation, et un deuxième élément, dit élément mobile, chacun des éléments comportant au moins une partie circulaire, des moyens d'assemblage disposés à leurs extrémités, et se caractérise en ce que l'élément fixe comporte des bossages disposés à proximité des extrémités de la partie circulaire sur la face intérieure, la distance séparant deux bossages en vis-à-vis étant inférieure au diamètre du tuyau à fixer, pour permettre de coincer momentanément les tuyaux à fixer, le collier étant réalisé en matériau embouti.

Un deuxième but de l'invention est de proposer un collier double qui facilite l'installation de tuyauteries sur un support fixe.

Ce but est atteint par le fait que chaque élément comporte à chaque extrémité une partie circulaire, les deux parties circulaires étant reliées entre elles par une partie centrale plane de façon à former un collier double, le moyen de fixation étant disposé sur la partie centrale.

Dans un but d'uniformité et de facilité de pose du collier par l'installateur, l'invention prévoit une harmonisation des entraxes des colliers doubles. Une même valeur d'entraxe déterminée est utilisée pour une pluralité de diamètres de tuyaux différents dans une plage de valeurs.

Un autre but de l'invention est de proposer un collier qui réalise l'un des deux premiers buts de l'invention, tout en ayant les mêmes facilités d'assemblage et de démontage que les colliers antérieurs.

Ce but est atteint par le fait que le collier de fixation de tuyauteries se caractérise en ce que les moyens d'assemblage des deux éléments sont constitués d'une oreille saillante conformée à chaque extrémité d'un des deux éléments, comportant un ergot orienté vers l'extérieur, et d'un crochet complémentaire conformé à chaque extrémité de l'autre élément, pour comporter une cavité complémentaire de l'ergot, de telle sorte que les crochets s'emboîtent dans les oreilles, l'assemblage étant maintenu par les ergots positionnés dans les cavités.

Selon une première variante, l'élément pourvu d'oreilles saillantes est l'élément fixe et l'élément pourvu de crochets est l'élément mobile.

Selon une autre variante, l'élément pourvu de crochets est l'élément fixe et l'élément pourvu d'oreilles est l'élément mobile.

Selon une autre particularité des deux variantes, chaque partie circulaire de l'élément fixe est supérieure à un demi-cercle, les extrémités de celle-ci étant disposées selon un angle de 1 à 10° par rapport au plan horizontal passant par le centre de courbure et les bossages étant disposés sur les portions de la face intérieure de la partie circulaire qui dépassent le demi-cercle.

Selon une autre particularité, la ou les parties circulaires sont reliées à la partie centrale plane et/ou aux moyens d'assemblages par des coudes sur lesquels les bossages sont positionnés.

Selon une autre particularité, les bossages sont positionnés selon l'axe de rayon de formage des coudes.

Selon une autre particularité, le collier de fixation possède un jonc de renfort qui est formé par emboutissage sur la face extérieure de chaque élément, créant une rainure sur la face intérieure de chaque élément, les extrémités de la rainure de l'élément possédant les crochets constituent des décrochements qui facilitent l'assemblage des deux éléments.

Selon une particularité, les bossages sont formés de part et d'autre de la rainure.

Selon une autre particularité, le moyen de fixation est constitué d'un écrou serti sur la face extérieure de la partie centrale de l'élément fixe de telle sorte que deux faces latérales opposées de l'écrou sont positionnées parallèlement par rapport aux côtés longitudinaux de l'élément fixe.

Selon une autre particularité une portion des côtés longitudinaux de la partie centrale est relevée pour être plaquée contre les faces latérales de l'écrou, pour former un arrêt en rotation de l'écrou.

Selon une autre particularité, des portions circulaires d'élastomère, possédant des rainures longitudinales, sont collées sur les parties circulaires des deux éléments en recouvrant les bossages.

Un autre but de l'invention est de proposer un procédé de fabrication d'un collier selon l'invention.

Pour atteindre ce but, le procédé de fabrication d'un collier de fixation selon l'invention, se caractérise en ce qu'il comprend les étapes suivantes :
a) une première étape de chanfreinage des extrémités de deux bandes à partir d'une tôle zinguée, l'une destinée à former un demi-collier fixe, l'autre destinée à former un demi-collier mobile,
b) une étape d'élaboration d'un perçage au milieu de la bande destinée à former le demi-collier fixe,
c) une étape d'emboutissage des joncs et d'emboutissage des bossages,
d) une étape de découpe des côtés longitudinaux des bandes excepté au niveau de leur partie centrale, et ensuite de cambrage des deux bandes en deux passes, pour former d'une part les moyens d'assemblage des deux demi-colliers, et d'autre part la (les) partie(s) circulaire(s) de chaque demi-collier,
e) une étape de sertissage d'un écrou sur le perçage élaboré à l'étape b),
f) une dernière étape de découpe finale de la partie centrale de telle sorte qu'un des demi-colliers tombe sous l'outil de découpe, l'autre étant chassé sur le côté sur une rampe.

Selon une autre particularité, un demi-collier fixe et un demi-collier mobile sont formés côte à côte en alternance en ayant le même axe transversal, par le même outil de découpe.

Selon une autre particularité, un demi-collier fixe et un demi-collier mobile sont formés en parallèle dans la même bande en ayant un même axe longitudinal.

Selon une autre particularité, le procédé de fabrication d'un collier de fixation comprend une étape de collage de portions circulaires d'élastomère, possédant des rainures longitudinales, sur la (les) partie(s) circulaire(s) des deux demi-colliers en recouvrant les bossages.

Selon une autre particularité, le procédé de fabrication d'un collier de fixation comprend une étape de pliage d'une portion des côtés longitudinaux de la partie centrale et de plaquage de ces portions contre les faces latérales de l'écrou.

D'autres particularités et avantages de la présente invention apparaîtront plus clairement à la lecture de la description ci-après faite en référence aux dessins annexés dans lesquels :
- les figures 1 et 2 représentent respectivement une vue de côté et une vue de dessus du demi-collier fixe constituant un collier double,
- la figure 3 représente une vue de côté du demi-collier mobile complémentaire du demi-collier fixe représenté aux figures 1 et 2,
- la figure 4 représente en vue de côté l'assemblage des deux demi-colliers,
- la figure 5 représente en vue de côté un collier double selon une particularité de l'invention,
- les figures 6 et 7 représentent en vue de côté les deux parties d'un collier simple, respectivement un demi-collier mobile et un demi-collier fixe.
- la figure 8 représente un procédé de fabrication d'un double collier en alternance selon l'invention,
- la figure 9 représente un deuxième procédé de fabrication d'un double collier en parallèle selon l'invention.

L'invention va à présent être décrite en référence aux figures.

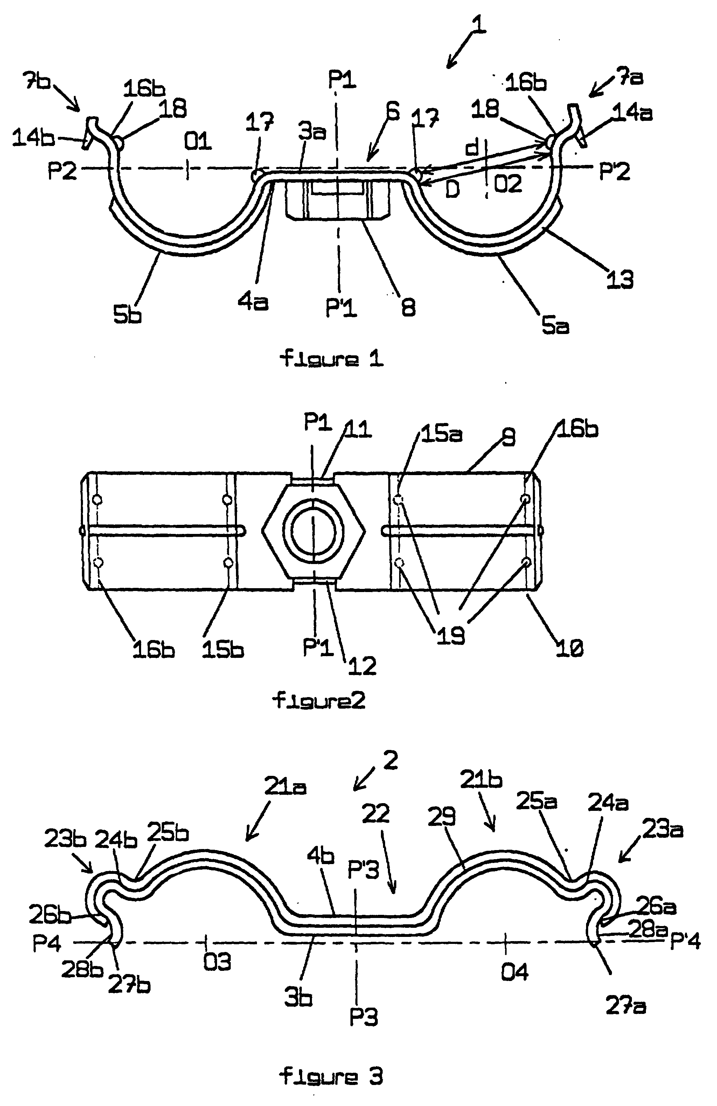

En référence aux figures 1 à 5, la description d'un double collier de fixation va à présent être effectuée. Le double collier est constitué de deux éléments en forme de demi-collier, un demi-collier destiné à être fixé par un élément fileté sur un support fixe constitué par un mur, par exemple, dit demi-collier fixe (1), et un demi-collier complémentaire, dit demi-collier mobile (2). Les deux demi-colliers sont élaborés à partir de deux bandes métalliques. Elles peuvent, par exemple, être constituées avantageusement de tôle électro-zinguée découpées et pliées ou embouties, ce qui permet de ne pas effectuer de traitement de surface ultérieurement. Les deux bandes possèdent deux faces principales, une face destinée à être en contact avec l'élément cylindrique à fixer, dite face intérieure (3a,3b), et une deuxième face, dite face extérieure (4a, 4b). Les bandes ont sensiblement la même largeur et la même épaisseur.

Suivant les figures 1 et 2, le demi-collier fixe (1) comprend deux parties circulaires (5a, 5b), symétriques par rapport au plan transversal (P1P'1), reliées entre elles par une partie centrale plane (6). La liaison entre la partie centrale plane et les parties circulaires peut être effectuée par un coude (15a, 15b). Les extrémités des deux parties circulaires opposées à la partie centrale se prolongent par des oreilles saillantes (7a, 7b). Les oreilles sont, par exemple, reliées aux parties circulaires par un coude (16a, 16b) obtenu, par exemple, par emboutissage. Les rayons de formage ou de courbure de ces coudes (16a, 16b) peuvent être sensiblement identiques à ceux (15a, 15b) reliant la partie centrale plane (6) aux parties circulaires (5a, 5b). Les parties circulaires (5a, 5b) possèdent un rayon de courbure adapté au diamètre du tuyau cylindrique que l'on veut fixer. Le diamètre (D) des parties circulaires est sensiblement égal au diamètre du tube à fixer. Le centre de courbure (O1, O2) des parties circulaires peut être positionné au-dessus du plan défini par la partie centrale plane. Le plan (P2P'2) passant par les centres de courbure (O1, O2) et parallèle à la partie centrale est référencé par le plan (P2P'2). Un moyen de fixation est formé sur cette partie centrale afin de permettre la fixation de ce demi-collier sur un support fixe. De façon avantageuse, un perçage cylindrique est effectué au milieu de la partie centrale plane (6). Un écrou (8) est ensuite serti dans ce perçage sur la face extérieure (4a) de la bande métallique. L'utilisation d'un écrou (8) évite ainsi toute opération de taraudage sur le demi-collier fixe (1), mais dans une variante, il serait possible de réaliser dans le perçage une collerette taraudée pour remplacer l'écrou. Selon une variante de réalisation, les côtés longitudinaux (9, 10) de la bande métallique sont relevés au niveau de la partie centrale (6) pour être plaqués contre les deux faces latérales opposées (11, 12) de l'écrou, disposées parallèlement par rapport aux côtés longitudinaux (9,10) de la bande métallique. Ainsi la fixation de l'écrou (8) est améliorée, tout mouvement de l'écrou par rapport à la bande métallique étant rendu impossible. Les côtés longitudinaux (9, 10) peuvent être relevés sur une longueur de 5 millimètres par exemple. Un jonc de renfort (13) est réalisé sur la face extérieure (4a) de la bande, longitudinalement, sensiblement au milieu, et au niveau des parties circulaires (5a, 5b). Ce jonc (13), formé par emboutissage par exemple, crée une rainure sur la face intérieure (3a) des parties circulaires (5a, 5b). Les extrémités des oreilles saillantes (7a, ab) peuvent être chanfreinées. Un ergot (14a, 14b), faisant saillie par rapport à la face extérieure de la bande, est positionné sur chaque oreille (7a, 7b). Selon le mode de réalisation décrit, les ergots sont disposés aux extrémités des oreilles sur l'axe médian longitudinal de la bande métallique. L'épaisseur de la bande métallique au niveau du jonc (13) ainsi que celle de la bande au niveau de chaque ergot peuvent être de l'ordre de 2,5 millimètres. La largeur du jonc et de chaque ergot peut être de l'ordre de 2,5 millimètres et la longueur de l'ergot de 3 millimètres.

Au moins un bossage est formé sur la face intérieure (3a) de la bande métallique, à proximité des extrémités des parties circulaires (5a, 5b). La distance (d) entre deux bossages, disposés chacun à proximité d'une des extrémités d'une partie circulaire, est inférieure au diamètre (D) du tube à fixer. Les parties circulaires décrivent une longueur sensiblement égale ou légèrement supérieure à un demi-cercle. A titre d'exemple, l'extrémité d'une partie circulaire est disposée par exemple selon un angle de 1° à 10° par rapport au plan (P2P'2) et les bossages sont disposés sur les portions de parties circulaires qui dépassent le demi-cercle. Selon un mode de réalisation, les parties circulaires décrivent une longueur sensiblement égale à un demi-cercle et aux parties circulaires, et au moins un bossage (17) est positionné au niveau des coudes (15a, 15b) reliant la partie centrale (6) à chaque partie circulaire (5a, 5b) et au moins un bossage (18) est positionné au niveau des coudes (16a, 16b) reliant les oreilles saillantes (14a, 14b) aux parties circulaires (5a, 5b). Chaque coude défini précédemment peut posséder deux bossages disposés symétriquement par rapport à l'axe médian longitudinal de la bande métallique. Ainsi, chaque partie circulaire possède quatre bossages (19). Ces bossages peuvent par exemple être formés sensiblement dans l'axe des rayons de formage des coudes (15a, 15b) (16a, 16b). Ces bossages de retenue peuvent avoir une épaisseur de l'ordre de 0,7 millimètres. Les bossages positionnés sur les coudes (16a, 16b) reliant les oreilles aux parties circulaires peuvent par exemple être disposés sensiblement selon un angle (y1) de 17° par rapport au plan (P2P'2) parallèle à la partie centrale et passant par les centres de courbure (O1, O2) des parties circulaires. A titre d'exemple, la distance (d) entre deux bossages en vis-à-vis est inférieure au diamètre (D) du tube à fixer de 0,6 millimètres.

Lors de l'utilisation du collier selon l'invention pour la fixation de tuyauteries par exemple, le demi-collier peut être fixé sur un support fixe par l'écrou (8) serti, les bossages permettent ensuite de coincer les tuyaux sur le demi-collier fixe (1) avant la pose finale. Cette fixation momentanée permet de vérifier la prise de mesure, ajuster les tuyaux les uns par rapport aux autres ou souder les tuyaux par exemple. Le collier selon l'invention facilite ainsi l'installation de tuyauteries sur un support fixe. Le rayon de courbure des coudes (15a, 15b) (16a, 16b) étant opposé à celui des parties circulaires, la portée des parties circulaires est diminuée. La surface des parties circulaires en contact avec le tuyau correspond alors sensiblement à un demi-cercle ou moins d'un demi-cercle.

Suivant la figure 3, la bande métallique constituant le demi-collier mobile (2), complémentaire du demi-collier fixe (1) décrit précédemment possède deux parties circulaires (21a, 21b) symétriques par rapport à l'axe transversal (P3P'3), reliées entre elles par une partie centrale plane (22) sensiblement identique à la partie centrale (6) du demi-collier fixe (1). Le plan (P4P'4) passant par les centres de courbure (O3, O4) est parallèle à la partie centrale plane (22) et peut être légèrement décalé par rapport à celle-ci. La liaison entre la partie centrale et les parties circulaires peut être effectuée par un coude. Les extrémités des deux parties circulaires opposées à la partie centrale (22) sont conformées en crochets (23a, 23b) orientés radialement, selon le rayon de courbure des parties circulaires (21a, 21b). Les crochets (22a, 22b) sont constitués par deux plis. Un premier pli (24a, 24b) est relié aux parties circulaires par un coude (25a, 25b) et un deuxième pli (26a, 26b) est relié aux extrémités (27a, 27b) de la bande métallique par un coude (28a, 28b). Ces crochets (23a, 23b) permettent une élasticité et sont complémentaires des oreilles (7a, 7b), l'ensemble constituant le moyen de fixation des deux demi-colliers. Les extrémités (27a, 27b) de la bande métallique sont chanfreinées. La bande métallique possède un jonc (29) de renfort sur sa face extérieure (4b), formé sur la longueur de la bande, sensiblement au milieu, d'un crochet à l'autre. Ce jonc de renfort permet de rigidifier la bande métallique. Ce jonc (29) de renfort formé par emboutissage, forme une rainure sur la face intérieure (3b) de la bande métallique qui s'interrompt au niveau des coudes (28a, 28b) qui relient les crochets aux extrémités de la bandes métalliques. La largeur de ce jonc (29) est supérieure à celle du jonc (13) effectué sur le demi-collier fixe (1) et peut être de l'ordre de 3,5 millimètres.

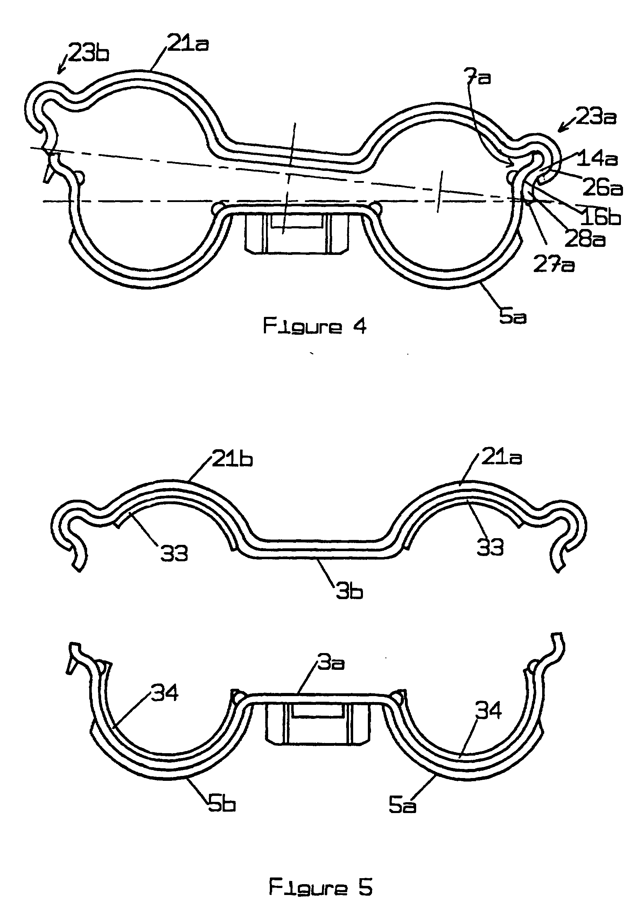

Les crochets (23a, 23b) et les oreilles (7a, 7b) constituent les moyens de fixation des deux demi-colliers (1, 2). L'assemblage des deux demi-colliers (1, 2), tel que représenté figure 4, s'effectue de la façon suivante : un premier crochet (23a) est positionné sur une des deux oreilles (7a), dite première oreille, de telle sorte que l'extrémité (32) de la rainure située au niveau du deuxième pli (26a) de ce premier crochet est positionnée sur l'ergot (14a) de l'oreille (7a). L'extrémité de la rainure forme ainsi une butée d'arrêt. Le coude (28a) qui relie le crochet (23a) à l'extrémité de la bande métallique (27a) est positionné sur le coude (16b) reliant l'oreille (7a) à la partie circulaire (5a). Une pression à l'aide du pouce est exercée sur la face supérieure (4b) du demi-collier mobile au niveau de la partie circulaire (21a), tout en exerçant un mouvement légèrement circulaire vers le deuxième crochet (23b). Ainsi, le deuxième crochet (23b) se déforme légèrement pour s'emboîter dans la deuxième oreille (7b), l'ergot (14b) de cette deuxième oreille étant positionné dans la rainure de la partie circulaire. Les ergots du demi-collier fixe (1) et les rainures du demi-collier mobile (2) permettent de bien positionner les deux demi-colliers l'un par rapport à l'autre lors de l'opération d'assemblage et permettent ensuite d'assurer un bon assemblage en empêchant les deux demi-colliers de se désemboîter accidentellement. Lorsque les deux demi-colliers sont assemblés, les centres de courbures (O1, O2, O3, O4) des parties circulaires des demi-colliers sont sensiblement confondus. Le demi-collier mobile peut ensuite se démonter très facilement à l'aide d'un outil. Une lame de tournevis, par exemple, peut permettre de désemboîter les deux demi-colliers. Dans ce mode de réalisation, la rainure formée sur le demi-collier mobile (2) forme un jonc de renfort sur la face extérieure et les extrémités de la rainure se combinent avec les ergots pour permettre un bon assemblage des deux demi-colliers. En absence de rainure, par exemple, de simples cavités complémentaires des ergots, traversant de part en part le demi-collier mobile (2) par exemple, peuvent jouer le rôle de la rainure dans l'assemblage des deux demi-colliers.

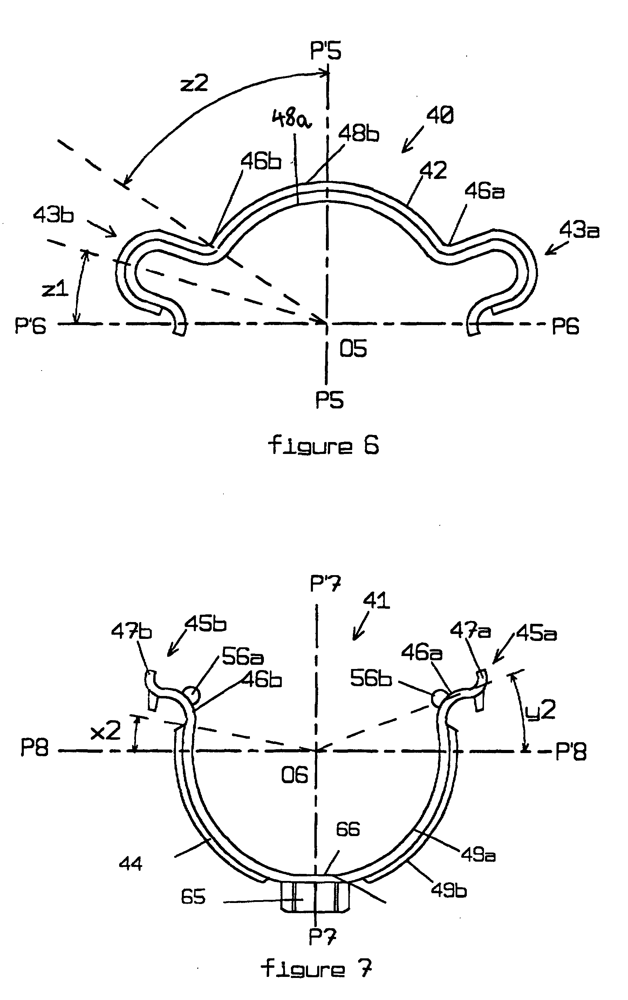

Avantageusement, un collier isophonique, tel que représenté figure 5, peut être disposé sur les faces intérieures (3a, 3b) des bandes métalliques au niveau des parties circulaires. Par exemple, des portions circulaires (33, 34) d'élastomère sont collées sur les parties circulaires (5a, 5b) du demi-collier fixe (1) et sur les parties circulaires (21a, 21b) du demi-collier mobile (2). Le collage peut s'effectuer avec de la colle cyanoacrylique. Préférablement, ces portions circulaires d'élastomère qui ont sensiblement la même largeur que les bandes métalliques, recouvrent les bossages et possèdent des rainures dans le sens longitudinal. Ces portions d'élastomère permettent ainsi d'atténuer la transmission des bruits provenant des tuyauteries au support sur lequel elles sont fixées au moyen du collier.

Une harmonisation des entraxes des tubes à fixer peut être prévue. Les centres de courbure des parties circulaires d'un double collier définissent l'entraxe du collier. Une valeur d'entraxe sera judicieusement choisie en fonction des diamètres de tuyaux utilisés habituellement dans les installations. Une même valeur d'entraxe déterminée est utilisée pour une pluralité de diamètres de tuyaux différents dans une plage de valeurs. Par exemple, les colliers de 6x8 et 8x10 possèdent le même premier entraxe, ensuite les colliers de 10x12, 12x14 et 14x16 ont aussi le même second entraxe, etc.

Le système de fixation peut être inversé et les oreilles saillantes et les crochets peuvent être conformés respectivement sur le demi-collier mobile et sur le demi-collier fixe. Ce type de collier peut bien entendu être adapté à différents diamètres de cylindre ou à des formes différentes.

Un tel collier présente de nombreux avantages par rapport aux colliers antérieurs. Son utilisation est très simple. L'assemblage et le démontage des deux demi-colliers s'effectuent avec une grande facilité. L'assemblage peut se réaliser sans utiliser d'outils. De plus, il possède tous les avantages d'un collier qui n'utilise pas de vis pour l'assemblage.

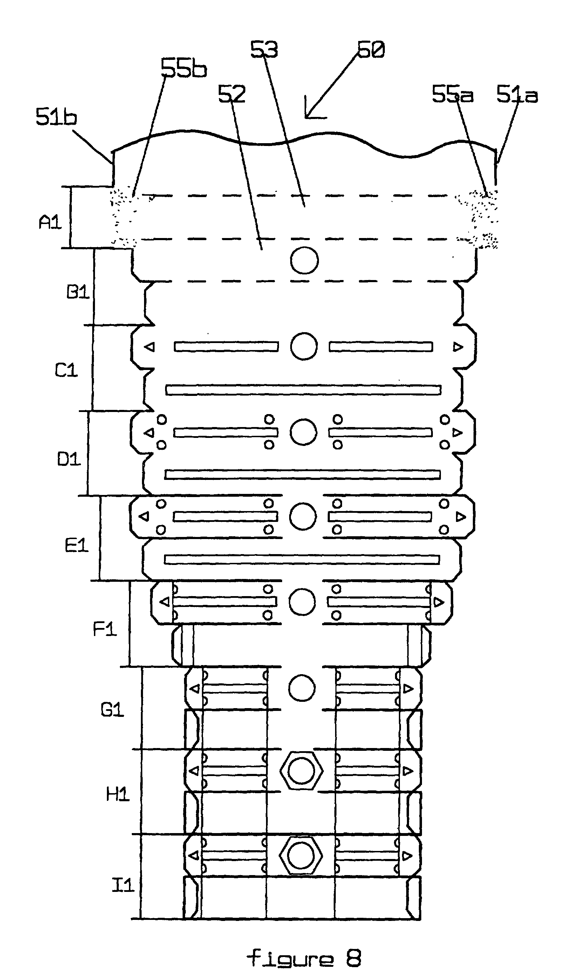

En référence aux figures 6 et 7, un collier simple selon l'invention va à présent être décrit. Le collier simple est constitué de deux demi-colliers (40, 41) fabriqués à partir de bandes métalliques embouties. Les deux demi-colliers comportent une face intérieure (48a, 49a) et une face extérieure (48b, 49b). Le demi-collier mobile (40) possède une partie centrale circulaire (42) possédant à chaque extrémité un crochet (43a, 43b) disposé symétriquement par rapport à l'axe transversal (P5P'5) et radialement par rapport au rayon de courbure de la partie centrale (42). Le demi-collier fixe (41) est constitué d'une partie centrale circulaire (44) possédant à chaque extrémité une oreille (45a, 45b) disposée symétriquement par rapport au plan transversal (P5P'5). Les oreilles (45a, 45b) et les crochets (43a, 43b) sont similaires à ceux décrits précédemment pour un double collier. Un système de fixation comparable à celui décrit précédemment peut être placé au milieu de la face extérieure de la partie centrale (44) du demi-collier fixe (41). Par exemple, la partie centrale (44) est aplanie sur une portion (66) équivalente au diamètre de la collerette de l'écrou (65). Au moins un bossage est formé sur la face intérieure (49a) de la bande métallique, à proximité des extrémités de la partie centrale circulaire (44), de façon similaire à l'un des modes de réalisation décrit précédemment pour un double collier. Ce collier simple s'utilise de la même façon que le collier double selon l'invention et présente les même avantages. A titre d'exemple, un mode de réalisation d'un collier simple pour la fixation de tuyaux de 14 millimètres de diamètre va suivre. Les crochets sont centrés selon un angle (z1) de 17° par rapport au plan horizontal (P6P'6) passant par le centre (05) de courbure de la partie centrale circulaire (42). Les coudes (46a, 46b) reliant les crochets à la partie centrale commencent à un angle (z2) de 52°20 par rapport au plan transversal (P5P'5). Chaque oreille est reliée à la partie centrale par un coude dont la courbure est orientée à l'opposé de la partie centrale circulaire (44) et est constituée par une partie circulaire (47a, 47b) dont la courbure est orientée dans le même sens que la courbure de la partie centrale (44). La partie circulaire décrit une longueur légèrement supérieure à un demi-cercle. L'extrémité de la partie circulaire est par exemple disposée à un angle de 10° par rapport au plan horizontal (P8P'8) passant par le centre (06) de courbure et au moins un bossage (56a, 56b) est positionné au niveau des coudes (46a, 46b) reliant la partie centrale circulaire (44) à chaque oreille (45a, 45b). Chaque coude défini précédemment peut posséder deux bossages disposés symétriquement par rapport à l'axe médian longitudinal de la bande métallique. Ces bossages peuvent par exemple être formés sensiblement dans l'axe des rayons de formage des coudes (46a, 46b). Ces bossages de retenue peuvent avoir une épaisseur de l'ordre de 0,7 millimètres et être disposés sensiblement à 17° par rapport au plan(P8P'8).

Les colliers décrits précédemment peuvent être obtenus suivants différents procédés. En référence à la figure 8, un premier procédé de fabrication d'un double collier va suivre. Les deux demi-colliers sont fabriqués avantageusement à partir d'une même plaque métallique. L'utilisation de tôle zinguée, pour constituer les deux demi-colliers, permet de ne pas effectuer de traitement de surface ultérieurement. Le procédé de fabrication se trouve alors simplifié. Lors de ce premier procédé, les demi-colliers fixes et les demi-colliers mobiles sont fabriqués alternativement dans le sens de la longueur de la tôle (50) en ayant le même axe transversal. Un demi-collier fixe est alors intercalé entre deux demi-colliers mobiles et vice-versa. Dans une première étape (A1), les côtés latéraux de la tôle (51a, 51b) sont découpés, à l'aide d'un outil (55a, 55b) tel que représenté sur la figure par exemple, pour former côte à côte dans le sens de la longueur, deux bandes métalliques. Une bande (52) est destinée à constituer un demi-collier fixe et une autre bande (53) est destinée à constituer un demi-collier mobile. Selon un mode de réalisation, la largeur de la tôle métallique est égale à la longueur de la tôle nécessaire pour réaliser un demi-collier fixe selon l'invention, tel que décrit précédemment. Un outil découpe les côtés latéraux (51a, 51b) de la tôle (50) pour créer une bande (53) qui ait une longueur proportionnelle à la longueur nécessaire pour réaliser un demi-collier mobile sur une longueur de tôle égale à la largeur des demi-colliers mobiles voulus. Lors de cette première étape, le chanfreinage des extrémités des deux demi-colliers est réalisé à l'aide du même outil de découpe. Dans une seconde étape (B1), un perçage est effectué sur les bandes destinées à former les demi-colliers fixes. Dans une étape suivante (C1), l'emboutissage des joncs du demi-collier mobile et du demi-collier fixe tels que définis précédemment lors de la description du double collier selon l'invention, ainsi que l'emboutissage des ergots du demi-collier fixe sont effectués. Dans une autre étape (D1), l'emboutissage des bossages du demi-collier fixe (1) est réalisé, tel que décrit précédemment. Dans une étape suivante (E1), les côtés longitudinaux des demi-colliers sont ensuite découpés excepté sur une portion de leur partie centrale plane. Ce prédécoupage permet d'effectuer le cambrage des demi-colliers pour leur donner leur forme finale. Le cambrage s'effectue en deux étapes (F1, G1). Dans une première étape (F1), les oreilles du demi-collier fixe et les crochets du demi-collier mobile sont réalisés. Dans une deuxième étape (G1), les parties circulaires de chaque demi-collier sont formées. Dans une étape suivante (H1), un écrou est ensuite serti par le perçage. La dernière étape (I1) consiste à réaliser le découpage des parties centrales des demi-colliers. Ce découpage final peut faire tomber un des deux demi-colliers sous l'outil de découpe et l'autre peut être chassé sur le côté par l'intermédiaire d'une rampe.

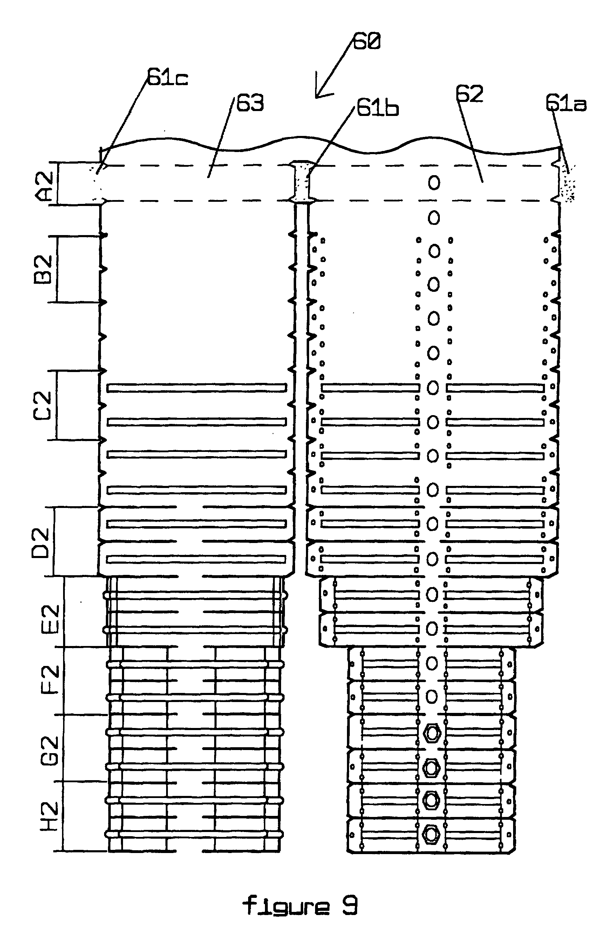

Selon un deuxième procédé, en référence à la figure 9, les deux demi-colliers sont aussi réalisés à partir d'une même plaque métallique mais sur deux parties distinctes et parallèles de la tôle. Un demi-collier fixe et un demi-collier mobile sont réalisés côte à côte dans le sens de la largeur de la tôle en ayant le même axe longitudinal. Dans une première étape (A2), un outil (61a, 61b, 61c) découpe la tôle (60) pour créer, d'une part une bande (62) destinée à réaliser les demi-colliers fixes dont la longueur est proportionnelle à la longueur du demi-collier souhaité, et d'autre part une partie (63) destinée à réaliser les demi-colliers mobiles dont la longueur est proportionnelle à la longueur du demi-collier souhaité. Lors de cette première étape, le chanfreinage des extrémités de deux bandes destinées à former les deux demi-colliers est réalisé ainsi qu'un perçage sur les bandes de bande métallique destinées à former les demi-colliers fixes. Dans une deuxième étape (B2), l'emboutissage des bossages du demi-collier fixe est réalisé, tel que décrit précédemment. Dans une étape suivante (C2), l'emboutissage des joncs sur chaque demi-collier tel que défini précédemment lors de la description du double collier selon l'invention, ainsi que l'emboutissage des ergots du demi-collier fixe sont effectués. Dans une étape suivante (D2), les côtés longitudinaux des demi-colliers sont découpés excepté au niveau de leur partie centrale. Ce prédécoupage permet d'effectuer le cambrage des demi-colliers pour leur donner leur forme finale. Le cambrage s'effectue en deux étapes (E2, F2). Dans une première étape (E2), les oreilles du demi-collier fixe et les crochets du demi-collier mobile sont réalisés. Dans une deuxième étape (F2), les parties circulaires de chaque demi-collier sont formées. Dans une étape suivante (G2), un écrou est serti par le perçage. La dernière étape (H2) consiste à réaliser le découpage des parties centrales des demi-colliers.

Une étape de collage de portions élastomère peut être intercalée entre deux étapes des procédés décrits précédemment. Par exemple, le collage peut s'effectuer entre les étapes de cambrage et la découpe finale.

Une étape de pliage des côtés latéraux au niveau de la partie centrale du demi-collier fixe peut aussi être intercalée entre deux étapes des procédés. Par exemple, une découpe des parties de bande métallique à relever peut être effectuée lors de l'étape de prédécoupage décrit précédemment, les côtés peuvent ensuite être relevés.

L'ordre des étapes varie entre les deux procédés décrits. D'autres changements dans l'ordre des étapes peuvent être envisagés. Ce procédé peut bien entendu être adapté facilement aux colliers simples et à d'autres types de colliers.

Un tel procédé comprend de nombreux avantages. Un seul format de tôle est nécessaire pour réaliser le collier. Il nécessite qu'une seule presse pour réaliser le découpage des deux parties du collier. Ainsi ce procédé permet de réaliser un gain de place pour la fabrication du collier et nécessite la présence d'un seul opérateur. De plus, ce procédé permet de limiter les pertes et le coût de fabrication se révèle être considérablement réduit.

## Revendications

1. Collier de fixation de tuyauteries ou analogue constitué d'au moins deux éléments (40,41) comprenant chacun une face extérieure (49b, 48b) opposée à l'élément à fixer et une face intérieure (49a, 48a), au moins un premier élément, dit élément fixe (41,1), comportant un moyen de fixation, et un deuxième élément, dit élément mobile (40, 2), chacun des éléments comportant au moins une partie circulaire (42, 44), des moyens d'assemblage disposés à leurs extrémités, **caractérisé en ce que** l'élément fixe (41) comporte des bossages (17, 18, 56a, 56b) disposés à proximité des extrémités de la partie circulaire, sur la face intérieure (49a, 48a), la distance (d) séparant deux bossages en vis-à-vis étant inférieure au diamètre du tuyau à fixer, pour permettre de coincer momentanément les tuyaux à fixer, le collier étant réalisé en matériau embouti.

2. Collier de fixation de tuyauteries selon la revendication 1, **caractérisé en ce que** chaque élément comporte à chaque extrémité une partie circulaire (5a, 5b, 21a, 21b), les deux parties circulaires étant reliées entre elles par une partie centrale plane (6, 22) de façon à former un collier double, le moyen de fixation étant disposé sur la partie centrale (6).

3. Collier de fixation de tuyauteries selon la revendication 2, **caractérisé en ce qu'**une même valeur d'entraxe déterminée est utilisée pour une pluralité de diamètres de tuyaux différents dans une plage de valeur.

4. Collier de fixation de tuyauteries selon l'une des revendications 1 à 3, **caractérisé en ce que** les moyens d'assemblage des deux éléments sont constitués d'une oreille saillante (7a, 7b) conformée à chaque extrémité d'un des deux éléments et d'un crochet (23a, 23b) complémentaire conformé à chaque extrémité de l'autre élément, de telle sorte que les crochets s'emboîtent dans les oreilles.

5. Collier de fixation de tuyauteries selon la revendication 4, **caractérisé en ce que** chaque oreille (7a, 7b) comporte un ergot (14a, 14b) orienté vers l'extérieur.

6. Collier de fixation de tuyauteries selon la revendication 5, **caractérisé en ce que** chaque crochet (23a, 23b) comporte une cavité complémentaire de l'ergot (14a, 14b).

7. Collier de fixation de tuyauteries selon la revendication 6, **caractérisé en ce que** l'assemblage des oreilles et des crochets est maintenu par les ergots positionnés dans les cavités.

8. Collier de fixation de tuyauteries selon la revendication 7, **caractérisé en ce que** l'élément pourvu d'oreilles saillantes (7a, 7b) est l'élément fixe (1, 41) et l'élément pourvu de crochets (23a, 23b) est l'élément mobile (2,42).

9. Collier de fixation de tuyauteries selon la revendication 7, **caractérisé en ce que** l'élément pourvu de crochets (23a, 23b) est l'élément fixe (1, 41) et l'élément pourvu d'oreilles (7a, 7b) est l'élément mobile (2, 42).

10. Collier de fixation de tuyauteries selon l'une des revendications précédentes, **caractérisé en ce que** chaque partie circulaire (44, 5a, 5b) de l'élément fixé est supérieure à un demi-cercle, les extrémités de celle-ci étant disposées selon angle de 1 à 10° par rapport au plan horizontal passant par le centre de courbure et les bossages étant disposés sur les portions de la face intérieure de la partie circulaire qui dépassent le demi-cercle.

11. Collier de fixation de tuyauterie selon l'une des revendications précédentes, **caractérisé en ce que** le ou les parties circulaires sont reliées à la partie centrale plane et/ou aux moyens d'assemblages par des coudes sur lesquels les bossages sont positionnés.

12. Collier de fixation selon la revendication 11, **caractérisé en ce que** les bossages sont positionnés selon l'axe de rayon de formage des coudes.

13. Collier de fixation de tuyauteries selon l'une des revendications 4 à 12, **caractérisé en ce qu'**un jonc (13, 29) de renfort est formé par emboutissage sur la face extérieure (49b, 48b, 3b, 4b) de chaque élément (1, 2, 40, 41), créant une rainure sur la face intérieure (49a, 48a, 3a, 4a) de chaque élément, les extrémités de la rainure de l'élément possédant les crochets constituent des décrochements qui facilitent l'assemblage des deux éléments.

14. Collier de fixation de tuyauteries selon la revendication 13, **caractérisé en ce que** les bossages (17, 18) sont formés de part et d'autre de la rainure.

15. Collier de fixation de tuyauterie selon l'une des revendications précédentes, **caractérisé en ce que** le moyen de fixation est constitué d'un écrou (8) serti sur la face extérieure (4a, 49b) de la partie centrale (6, 44) de l'élément fixe (1, 41) de telle sorte que deux faces latérales opposées de l'écrou (8) sont positionnées parallèlement par rapport aux côtés longitudinaux de l'élément fixe.

16. Collier de fixation de tuyauteries selon la revendication 15, **caractérisé en ce qu'**une portion des côtés longitudinaux de la partie centrale (6,44) est relevée pour être plaquée contre les faces latérales de l'écrou (8), pour former un arrêt en rotation de l'écrou.

17. Collier de fixation de tuyauteries selon l'une des revendications précédentes, **caractérisé en ce que** des portions circulaires d'élastomère (33,34), possédant des rainures longitudinales, sont collées sur les parties circulaires (5a, 5b, 21a, 21b, 42, 44) des deux éléments en recouvrant les bossages (17, 18).

18. Collier de fixation de tuyauteries selon l'une des revendications précédentes, **caractérisé en ce que** le moyen de fixation de l'élément fixe est un écrou serti.

19. Procédé de fabrication d'un collier de fixation, **caractérisé en ce qu'**il comprend les étapes suivantes :
a) une première étape de chanfreinage des extrémités de deux bandes à partir d'une tôle zinguée, l'une destinée à former un demi-collier fixe, l'autre destinée à former un demi-collier mobile,
b) une étape d'élaboration d'un perçage au milieu de la bande destinée à former le demi-collier fixe,
c) une étape d'emboutissage des joncs et d'emboutissage des bossages,
d) une étape de découpe des côtés longitudinaux des bandes excepté au niveau de leur partie centrale, et ensuite de cambrage des deux bandes en deux passes, pour former d'une part les moyens d'assemblage des deux demi-colliers, et d'autre part la (les) partie(s) circulaire(s) de chaque demi-collier,
e) une étape de sertissage d'un écrou sur le perçage élaboré à l'étape b),
f) une dernière étape de découpe finale de la partie centrale de telle sorte qu'un des demi-colliers tombe sous l'outil de découpe, l'autre étant chassé sur le côté sur une rampe.

20. Procédé de fabrication d'un collier de fixation selon la revendication 19, **caractérisé en ce qu'**un demi-collier fixe et un demi-collier mobile sont formés côte à côte en alternance en ayant le même axe transversal par le même outil de découpe.

21. Procédé de fabrication d'un collier de fixation selon la revendication 19, **caractérisé en ce qu'**un demi-collier fixe et un demi-collier mobile sont formés en parallèle dans la même bande en ayant un même axe longitudinal.

22. Procédé de fabrication d'un collier de fixation selon l'une des revendications 19 à 21, **caractérisé en ce qu'**il comprend une étape de collage de portions circulaires d'élastomère, possédant des rainures longitudinales, sur la (les) partie(s) circulaire(s) des deux demi-colliers en recouvrant les bossages.

23. Procédé de fabrication d'un collier de fixation selon l'une des revendications 19 à 22, **caractérisé en ce qu'**il comprend une étape de pliage d'une portion des côtés longitudinaux de la partie centrale et de plaquage de ces portions contre les faces latérales de l'écrou.

## Claims

1. Clamp for fastening pipes and the like constituted by at least two members (40, 41) each comprising an outer face (49b, 48b) opposite the member to be fastened and an inner face (49a, 48a), at least one first member, referred to as a fixed member (41, 1), having a fastening means, and a second member, referred to as a mobile member (40, 2), each of the members having at least one circular part (42, 44), assembly means arranged at their ends, **characterised in that** the fixed member (41) has bosses (17, 18, 56a, 56b) arranged in the proximity of the ends of the circular part, on the inner face (49a, 48a), the distance (d) separating two bosses facing each other being less than the diameter of the pipe to be fastened, in order to allow the temporary wedging of the pipes to be fastened, the clamp being made out of pressed material.

2. Pipe fastening clamp according to Claim 1, **characterised in that** each member has at each end a circular part (5a, 5b, 21a, 21b), the two circular parts being connected together by a flat central part (6, 22) in order to form a double clamp, the fastening means being arranged on the central part (6).

3. Pipe fastening clamp according to Claim 2, **characterised in that** the same given value of distance between centres is used for a plurality of different pipe diameters within a range of values.

4. Pipe fastening clamp according to one of Claims 1 to 3, **characterised in that** the means for assembling the two members are constituted by a projecting lug (7a, 7b) formed at each end of one of the two elements, and by a complementary hook (23a, 23b) formed at each end of the other member, so that the hooks fit into the lugs.

5. Pipe fastening clamp according to Claim 4, **characterised in that** each lug (7a, 7b) has a pin (14a, 14b) directed outwards.

6. Pipe fastening clamp according to Claim 5, **characterised in that** each hook (23a, 23b) has a cavity complementary to the pin (14a, 14b).

7. Pipe fastening clamp according to Claim 6, **characterised in that** the assembly of lugs and hooks is held by the pins positioned in the cavities.

8. Pipe fastening clamp according to Claim 7, **characterised in that** the member provided with projecting lugs (7a, 7b) is the fixed member (1, 41) and the member provided with hooks (23a, 23b) is the mobile member (2, 42).

9. Pipe fastening clamp according to Claim 7, **characterised in that** the member provided with hooks (23a, 23b) is the fixed member (1,41) and the member provided with lugs (7a, 7b) is the mobile member (2,42).

10. Pipe fastening clamp according to one of the preceding claims, **characterised in that** the circular part (44, 5a, 5b) of the fixed member is greater than a semi-circle, the ends of the latter being arranged at an angle of 1 to 10° with respect to the horizontal plane passing through the centre of curvature and the bosses being arranged on the portions of the inner face of the circular part that protrude from the semi-circle.

11. Pipe fastening clamp according to one of the preceding claims, **characterised in that** the circular part(s) are connected to the flat central part and/or to the assembly means by elbows on which the bosses are positioned.

12. Fastening clamp according to Claim 11, **characterised in that** the bosses are positioned along the axis of the radius by which the elbows are formed.

13. Pipe fastening clamp according to one of Claims 4 to 12, **characterised in that** a reinforcing retaining ring (13, 29) is formed by stamping on the outer face (49b, 48b, 3b, 4b) of each member (1, 2, 40, 41), creating a groove on the inner face (49a, 48a, 3a, 4a) of each member, the ends of the groove of the member having the hooks constitute unhookings that facilitate the assembly of the two members.

14. Pipe fastening clamp according to Claim 13, **characterised in that** the bosses (17, 18) are formed on either side of the groove.

15. Pipe fastening clamp according to one of the preceding claims, **characterised in that** the fastening means is constituted by a nut (8) crimped to the outer face (4a, 49b) of the central part (6, 44) of the fixed member (1, 41) so that two opposite side faces of the nut (8) are positioned parallel with respect to the longitudinal sides of the fixed member.

16. Pipe fastening clamp according to Claim 15, **characterised in that** a portion of the longitudinal sides of the central part (6, 44) is raised so as to be pressed against the side faces of the nut (8), in order to form a rotation stop for the nut.

17. Pipe fastening clamp according to one of the preceding claims, **characterised in that** circular portions of elastomer (33, 34), having longitudinal grooves, are stuck to the circular parts (5a, 5b, 21a, 21b, 42, 44) of the two members, covering the bosses (17, 18).

18. Pipe fastening clamp according to one of the preceding claims, **characterised in that** the means for fastening the fixed member is a crimped nut.

19. Method for manufacturing a fastening clamp, **characterised in that** it comprises the following steps:
a) a first step of chamfering the ends of two strips from a zinc-coated sheet, one intended to form a fixed half-clamp, the other intended to form a mobile half-clamp,
b) a step of producing a hole in the middle of the strip intended to form the fixed half-clamp,
c) a step of stamping retaining rings and of stamping bosses,
d) a step of cutting out the longitudinal sides of the strips except in their central part, and then of cambering of the two strips in two passes, in order to form both the assembly means for the two half-clamps, and also the circular part(s) of each half-clamp,
e) a step of crimping a nut to the hole made in step b),
f) a last step of final cutting out of the central part in such a way that one of the half-clamps falls under the cutting-out tool, the other being driven away to the side on a ramp.

20. Method for manufacturing a fastening clamp according to Claim 19, **characterised in that** a fixed half-clamp and a mobile half-clamp are formed alternately side by side, while having the same transverse axis, by the same cutting tool.

21. Method for manufacturing a fastening clamp according to Claim 19, **characterised in that** a fixed half-clamp and a mobile half-clamp are formed in parallel from the same strip while having the same longitudinal axis.

22. Method for manufacturing a fastening clamp according to one of Claims 19 to 21, **characterised in that** it comprises a step of sticking circular elastomer portions, having longitudinal grooves, to the circular part(s) of the two half-clamps, covering the bosses.

23. Method for manufacturing a fastening clamp according to one of Claims 19 to 22, **characterised in that** it comprises a step of folding a portion of the longitudinal sides of the central part and of pressing these portions against the side faces of the nut.

## Patentansprüche

1. Befestigungsschelle für Rohrleitungen oder dergleichen, bestehend aus mindestens zwei Elementen (40, 41), mit jeweils einer vom zu befestigenden Element abgewandten Außenseite (49b, 48b) und einer Innenseite (49a, 48a), mit mindestens einem ersten, sogenannten feststehenden Element (41, 1), das ein Befestigungsmittel aufweist, und einem zweiten, sogenannten beweglichen Element (40, 2), wobei die Elemente jeweils mindestens einen kreisförmigen Teil (42, 44) sowie Zusammenfügungsmittel aufweisen, die an ihren Enden angeordnet sind, **dadurch gekennzeichnet, daß** das feststehende Element (41) Höcker (17, 18, 56a, 56b) aufweist, die in der Nähe der Enden des kreisförmigen Teils auf der Innenseite (49a, 48a) angeordnet sind, wobei der Abstand (d) zwischen zwei gegenüberliegenden Höckern kleiner ist als der Durchmesser des zu befestigenden Rohrs, um die befestigenden Rohre zeitweilig zu klemmen, wobei die Schelle aus einem tiefgezogenem Material besteht.

2. Befestigungsschelle für Rohrleitungen nach Anspruch 1, **dadurch gekennzeichnet, daß** jedes Element an jedem Ende einen kreisförmigen Teil (5a, 5b, 21a, 21b) aufweist, wobei die beiden kreisförmigen Teile untereinander mit einem ebenen mittleren Teil (6, 22) verbunden sind, so daß eine doppelte Schelle gebildet ist, wobei das Befestigungsmittel am mittleren Teil (6) angeordnet ist.

3. Befestigungsschelle für Rohrleitungen nach Anspruch 2, **dadurch gekennzeichnet, daß** ein gleicher bestimmter Achsabstandswert für eine Vielzahl von Durchmessern von verschiedenen Rohren in einem Wertbereich verwendet wird.

4. Befestigungsschelle für Rohrleitungen nach einem der Ansprüche 1 bis 3, **dadurch gekennzeichnet, daß** die Zusammenfügungsmittel der beiden Elemente aus einer an jedem Ende eines der beiden Elemente angeformten, vorstehenden Öse (7a, 7b) und einem an jedem Ende des anderen Elements angeformten komplementären Haken (23a, 23b) bestehen, so daß die Haken in die Ösen eingreifen.

5. Befestigungsschelle für Rohrleitungen nach Anspruch 4, **dadurch gekennzeichnet, daß** jede Öse (7a, 7b) eine nach außen gerichtete Nase (14a, 14b) aufweist.

6. Befestigungsschelle für Rohrleitungen nach Anspruch 5, **dadurch gekennzeichnet, daß** jeder Haken (23a, 23b) eine zur Nase (14a, 14b) komplementäre Vertiefung aufweist.

7. Befestigungsschelle für Rohrleitungen nach Anspruch 6, **dadurch gekennzeichnet, daß** die zusammengefügten Ösen und Haken durch die in den Vertiefungen positionierten Nasen gehalten sind.

8. Befestigungsschelle für Rohrleitungen nach Anspruch 7, **dadurch gekennzeichnet, daß** das mit vorstehenden Ösen (7a, 7b) versehene Element das feststehende Element (1, 41) und das mit Haken (23a, 23b) versehene Element das bewegliche Element (2, 42) ist.

9. Befestigungsschelle für Rohrleitungen nach Anspruch 7, **dadurch gekennzeichnet, daß** das mit Haken (23a, 23b) versehene Element das feststehende Element (1, 41) und das mit Ösen (7a, 7b) versehene Element das bewegliche Element (2, 42) ist.

10. Befestigungsschelle für Rohrleitungen nach einem der vorhergehenden Ansprüche, **dadurch gekennzeichnet, daß** jeder kreisförmige Teil (44, 5a, 5b) des feststehenden Elements größer ist als ein Halbkreis, wobei dessen Enden in einem Winkel von 1 bis 10° zur horizontalen, durch den Krümmungsmittelpunkt hindurchgehenden Ebene angeordnet sind, und wobei die Höcker auf den Abschnitten der Innenseite des kreisförmigen Teil liegen, die über den Halbkreis hinausgehen.

11. Befestigungsschelle für Rohrleitungen nach einem der vorhergehenden Ansprüche, **dadurch gekennzeichnet, daß** der kreisförmige Teil oder die kreisförmige Teile mit dem ebenen zentralen Teil und/oder mit den Zusammenfügungsmitteln durch Biegungen verbunden sind, an welchen die Höcker positioniert sind.

12. Befestigungsschelle für Rohrleitungen nach Anspruch 11, **dadurch gekennzeichnet, daß** die Höcker entlang der Achse des Formungsradius der Biegungen positioniert sind.

13. Befestigungsschelle für Rohrleitungen nach einem der Ansprüche 4 bis 12, **dadurch gekennzeichnet, daß** ein Verstärkungsring (13, 29) an der Innenseite (49b, 48b, 3b, 4b) jedes Elements (1, 2, 40, 41) durch Tiefziehen gebildet ist und auf der Innenseite (49b, 48b, 3b, 4b) jedes Elements (1, 2, 40, 41) eine Rille bildet, wobei diejenigen Enden der Rille des Elements, das die Haken aufweist, die Absätze bilden, welche das Zusammenfügen der beiden Elemente erleichtert.

14. Befestigungsschelle für Rohrleitungen nach Anspruch 13, **dadurch gekennzeichnet, daß** die Höcker (17, 18) beidseitig der Rille gebildet sind.

15. Befestigungsschelle für Rohrleitungen nach einem der vorhergehenden Ansprüche, **dadurch gekennzeichnet, daß** das Befestigungsmittel aus einer Mutter (8) gebildet ist, die auf der Außenseite (4a, 49b) des zentralen Teils (6, 44) des feststehenden Elements (1, 41) verstemmt ist, so daß zwei aneinander gegenüberliegende Seitenflächen der Mutter (8) parallel zu den Längsseiten des feststehenden Elements positioniert sind.

16. Befestigungsschelle für Rohrleitungen nach Anspruch 15, **dadurch gekennzeichnet, daß** ein Abschnitt der Längsseiten des zentralen Teils (6, 44) hochgezogen ist, um gegen die Seitenflächen der Mutter (8) angelegt zu werden, um eine Drehsicherung der Mutter zu bilden.

17. Befestigungsschelle für Rohrleitungen nach einem der vorhergehenden Ansprüche, **dadurch gekennzeichnet, daß** kreisförmige Abschnitte aus Elastomer (33, 34) mit Längsrillen auf die kreisförmigen Teile (5a, 5b, 21a, 21b, 42, 44) der beiden Elemente aufgeklebt sind und dabei die Höcker (17, 18) abdecken.

18. Befestigungsschelle für Rohrleitungen nach einem der vorhergehenden Ansprüche, **dadurch gekennzeichnet, daß** das Befestigungsmittel des feststehenden Elements eine verstemmte Mutter ist.

19. Verfahren zur Herstellung einer Befestigungsschelle, **dadurch gekennzeichnet, daß** es folgende Schritte aufweist:
a) zunächst werden die Enden von zwei Streifen aus einem Zinkblech abgeschrägt, wobei der eine Streifen zur Bildung einer feststehenden Halbschelle und der andere zur Bildung einer beweglichen Halbschelle dient,
b) eine Bohrung wird in der Mitte des Streifens ausgearbeitet, der dazu bestimmt ist, die feststehende Halbsschelle zu bilden,
c) die Ringe und Höcker werden tiefgezogen,
d) die Längsseiten der Streifen mit Ausnahme ihres zentralen Teiles werden gestanzt, und die beiden Streifen werden anschließen in zwei Arbeitsgängen gebogen, um die Mittel zum Zusammenfügen der beiden Halbschellen einerseits und den kreisförmigen Teil bzw. die kreisförmigen Teile jeder Halbschelle andererseits zu bilden,
e) eine Mutter wird in der beim Schritt b) ausgearbeiteten Bohrung verstemmt,
f) abschließend wird der zentrale Teil ausgestanzt, so daß eine der Halbschellen unterhalb des Stanzwerkzeugs fällt, wobei die andere seitlich auf eine Rampe ausgetrieben wird.

20. Verfahren zur Herstellung einer Befestigungsschelle nach Anspruch 19, **dadurch gekennzeichnet, daß** eine feststehende Halbschelle und eine bewegliche Halbschelle nebeneinander abwechselnd mit demselben Stanzwerkzeug gebildet werden, wobei sie dieselbe Querachse aufweisen.

21. Verfahren zur Herstellung einer Befestigungsschelle nach Anspruch 19, **dadurch gekennzeichnet, daß** eine feststehende Halbschelle und eine bewegliche Halbschelle parallel in demselben Streifen gebildet werden, wobei sie dieselbe Längsachse aufweisen.

22. Verfahren zur Herstellung einer Befestigungsschelle nach einem der Ansprüche 19 bis 21, **dadurch gekennzeichnet, daß** kreisförmige Elastomer-Abschnitte, die Längsrillen aufweisen, auf den/die kreisförmigen Teil/Teilen der beiden Halbschellen geklebt werden, wobei die Höcker abgedeckt werden.

23. Verfahren zur Herstellung einer Befestigungsschelle nach einem der Ansprüche 19 bis 22, **dadurch gekennzeichnet, daß** ein Abschnitt der Längsseiten des zentralen Teil umgeschlagen wird und daß diese Abschnitte gegen die Seitenflächen der Mutter angelegt werden.
